# EUROPÄISCHE PATENTANMELDUNG

(11) **EP 2 423 118 A2**
(43) Veröffentlichungstag der Anmeldung: **29.02.2012**
(21) Anmeldenummer: 11177854.4
(22) Anmeldetag: 17.08.2011
(51) Int. Cl.: B65D 25/34, B65D 1/26, B65D 65/46

(54) **Verpackungsbehälter**

(30) Priorität: 25.08.2010 DE 202010008368 U
(71) Anmelder: Paccor Deutschland GmbH, 56859 Alf (DE)
(72) Erfinder:
(74) Vertreter: Hutzelmann, Gerhard

(57) **Zusammenfassung**

Verpackungsbehälters mit einem Innenteil (2) und einem Aussenteil (3), wobei das Innenteil (2) ein schalen- oder becherförmiges Behältnis bildet und das Aussenteil (3) das Innenteil wenigstens teilweise umschließt, wobei das Innenteil (2) aus einem formbaren, insbesondere thermoformbaren und/oder tiefziehbaren Material ein- oder mehrstückig hergestellt ist, wobei als Material vorzugsweise wenigstens ein ein- oder mehrlagiges einen Anteil aus nachwachsenden, biologisch abbaubaren und/oder recycelten Rohstoffen hergestelltes Material vorgesehen ist, das wenigstens in einer Lage mit Füllstoffen ausgerüstet ist und daß das Aussenteil (3) wenigstens den Umfang des Innenteils (2) wenigstens teilweise umschließt und aus einem nachwachsenden, biologisch abbaubaren und/oder recyceltem Rohstoff hergestellt ist, wobei vorzugsweise faserhaltige Materialien vorgesehen sein können.

## Beschreibung

Die Erfindung bezieht sich auf einen Verpackungsbehälter mit einem Innenteil und einem Aussenteil, wobei das Innenteil ein schalen- oder becherförmiges Behältnis bildet und das Aussenteil das Innenteil wenigstens teilweise umschließt.

Es sind verschiedene derartige Verpackungsbehälter bekannt, die jedoch allesamt sehr aufwendig gefertigt sind und/oder aus umweltproblematischen Materialien, das bedeutet oftmals aus auf Erdöl basierenden Materialien hergestellt werden müssen. Da diese sonst die erforderlichen Eigenschaften für die Verpackung von Lebensmitteln nicht aufweisen können.

Aufgabe der Erfindung ist es, die natürlichen Ressourcen besser zu nutzen und eine Verpackung des genannten Typs zu schaffen, die den Einsatz von umweltproblematischen Rohstoffen vermeidet oder zumindest weitestgehend verringert. Zudem sollen die Eigenschaften der eingesetzten Materialien angepasst und für den Einsatzzweck verbessert werden.

Diese Aufgabe wird erfindungsgemäß dadurch gelöst, daß das Innenteil aus einem formbaren, insbesondere thermoformbaren und/oder tiefziehbaren Material ein- oder mehrstückig hergestellt ist, wobei als Material vorzugsweise ein ein- oder mehrlagiges einen Anteil aus neuen, nachwachsenden, biologisch abbaubaren und/oder recycelten Rohstoffen hergestelltes Material vorgesehen ist, das wenigstens in einer Lage mit Füllstoffen ausgerüstet ist und daß das Aussenteil wenigstens den Umfang des Innenteils wenigstens teilweise umschließt und aus einem nachwachsenden, biologisch abbaubaren und/oder recyceltem Rohstoff hergestellt ist, wobei vorzugsweise faserhaltige Materialien vorgesehen sein können.

Durch die Nutzung von vergleichsweise günstigen Füllstoffen werden vorhandene Ressourcen geschont, wobei zugleich die Eigenschaften des Materials optimiert werden können. Wenn dies, wie beansprucht noch mit der Nutzung von nachwachsenden oder recycelten Rohstoffen kombiniert wird, wird eine optimale Schonung der Ressourcen erzielt. Es wird eine Verpackung geschaffen, die nicht nur umweltfreundlich, sondern auch sehr stabil ist und zudem für die Verpackung von Lebensmitteln wie zum Beispiel Joghurt oder dergleichen sehr gut geeignet ist.

Dabei hat es sich als sehr vorteilhaft erwiesen, wenn das Innenteil in das Außenteil hinein tiefgezogen oder in dieses hinein geblasen ist, wobei das spätere Innenteil als flache Folie oder als Vorformling vorgesehen sein kann.

Damit wird die Verpackung auf einfache Art und Weise hergestellt und zudem eine sehr gute, aber dennoch lösbare Verbindung geschaffen.

Gemäß einer weiteren Ausgestaltung der Erfindung ist es auch sehr vorteilhaft, wenn das Innenteil aus einem Polymer, insbesondere aus PS, PE, PP, PET, PVC, Stärkepolymeren, Polymilchsäure oder anderen natürlichen oder künstlichen Polymeren ein- oder mehrschichtig auch in Kombination mit Barriereschichten, Lacken oder dergleichen geformt ist und wenigstens in einer Schicht einen Anteil eines Füllstoffes, vorzugsweise CaC03, Quarz, Talkum, Stärke oder dergleichen enthält.

Diese Materialien sind lebensmittelgeeignet und dennoch sehr umweltfreundlich. Gegen einen direkten Kontakt spricht nichts. Durch den Einsatz von Füllstoffen lässt sich auch beispielsweise eine erwünschte Porosität erzeugen. Im wesentlichen wird aber der Bedarf an Rohstoffen, sprich an Polymeren verringert.

Erfindungsgemäß ist es dabei sehr vorteilhaft, wenn die Füllstoffe enthaltende Schicht durch mindestens eine weitere Schicht gegenüber dem Füllgut abgedeckt ist.

Die abdeckende Schicht kann beispielsweise als Barriereschicht dienen, die auch einen direkten Kontakt zwischen dem Füllgut und der Füllstoffe enthaltenden Schicht verhindert.

Sehr vorteilhaft ist es dabei, wenn der Anteil an recyceltem Kunststoffmaterial zwischen 0 und 80% beträgt.

Bei Füllstoffanteilen zwischen 0 und 80% wurden beste Erghebnisse erzielt.

Eine weitere erfindungsgemäß äußerst vorteilhafte Ausgestaltung liegt auch vor, wenn das Innenteil aus einem faserhaltigen Werkstoff wie Moulded-Fiber aber auch Papier, Pappe, Karton gefertigt ist, wobei diese auch aus recycelten Materialien hergestellt sein können, und wenigstens auf der Innenseite mit einer Resistenz-Schicht gegenüber Flüssigkeiten, Fetten oder dergleichen ausgerüstet sein kann und wobei diese Werkstoffe tiefgezogen oder in eine Form eingebracht sein können.

Damit wird ein direkter Kontakt des Grundmaterials des Innenteils zum Füllgut vermieden, und trotzdem sichergestellt, daß das Innenteil aus äußerst umweltfreundlichen Materialien gefertigt sein kann. Die Resistenzschicht kann als Kunststoffbeschichtung oder dergleichen ausgebildet sein und sorgt dafür, daß einerseits das Füllgut vor unerwünschten Umwelteinflüssen geschützt ist und andererseits das Füllgut nicht in die fasrigen Bestandteile des Innenteils einzudringen vermag.

Eine sehr vorteilhafte Weiterbildung der Erfindung liegt auch vor, wenn das Aussenteil aus einem faserhaltigen Werkstoff wie Papier, Pappe, Karton, Moulded-Fiber und/oder Polymerfilmen oder Teilen gefertigt ist und um das Innenteil herumgelegt, über dieses gestülpt ist oder als Tiefziehform für das Innenteil dienen kann.

Dieses im Allgemeinen nicht direkt mit dem Füllgut in Verbindung kommende Außenteil stabilisiert den Verpackungsbehälter und verleiht ihm eine solche Steifigkeit, daß der Behälter problemlos handhabbar ist. Dabei ist es nicht notwendig, daß das Material des Außenteils für einen direkten Kontakt mit dem Füllgut geeignet ist.

Erfindungsgemäß hat es sich auch als sehr vorteilhaft erwiesen, wenn wenigstens eine Kante des Außenteils abgedichtet und/oder feuchtigkeits-, flüssigkeits- und/oder fettunempfindlich ausgerüstet sein kann, wobei diese Abdichtung durch Beschichten, Abdecken und/oder Umfalten erzeugt sein kann.

Damit wird verhindert, daß Feuchtigkeit, Flüssigkeit und/oder Fette und Öle in die empfindliche, und meist hygroskopische Schnittkante des Außenteils einzudringen vermag.

Eine weitere sehr vorteilhaft Fortbildung der Erfindung liegt auch vor, wenn das Außenteil mit dem Innenteil durch Kleben, Klemmen und/oder Rasten verbunden ist, wobei wenigstens ein Vorsprung am Innenteil vorgesehen sein kann, der in ein entsprechendes Gegenstück am Außenteil einzugreifen vermag.

Dadurch wird eine feste, aber dennoch lösbare Verbindung zwischen Innenteil und Außenteil geschaffen.

Äußerst vorteilhaft ist es erfindungsgemäß auch, wenn wenigstens im Bereich des Überganges zwischen Boden und Seitenwand eine Verstärkungsrippe vorgesehen ist, die umlaufend ausgebildet sein kann, wobei die Verstärkungsrippe nach außen gerichtet und gleichzeitig als Rastnase für das Außenteil vorgesehen sein kann.

Diese Verstärkungsrippe kann nicht nur die Widerstandsfähigkeit des Behälters verbessern. Zusätzlich wird auch der Stand des Behälters auf einer Unterlage erheblich verbessert, indem einerseits die Aufstandsfläche mit dieser Rippe vergrößert werden kann, sofern die Rippe nach außen gerichtet ist, und andererseits der Schwerpunkt des Behälters in Richtung Boden verschoben wird. Zudem kann diese Rippe als Stapelhilfe dienen, und so ein unerwünschtes Festsaugen von mehreren ineinander gestapelten Bechern ineinander verhindern. Zudem kann eine der Verstärkungsrippe entsprechende Stapelkante im Inneren des Behälters vorgesehen sein, die etwas oberhalb der Verstärkungsrippe angeordnet ist und so mit dem Zusammenspiel von Stapelkante und Verstärkungsrippe die Einstecktiefe beim Stapeln von Bechern begrenzt wird. Es ist auch denkbar, daß die Verstärkungsrippe in Segmente unterteilt ist. Die Verstärkungsrippe kann auch als Anschlag für ein am Umfang angeordnetes Außenteil dienen und so ein unerwünschtes Herunterrutschen desselben verhindern.

Äußerst vorteilhaft ist es gemäß einer Weiterbildung der Erfindung auch, wenn das Außenteil mit wenigstens einer Verstärkungsrippe ausgerüstet wird, die umlaufend ausgebildet sein kann.

Damit wird die Stabilität des Außenteils erhöht. Die Materialstärken können reduziert werden. Es ist in diesem Zusammenhang auch denkbar, daß das Außenteil aus einem gewellten Material, zum Beispiel Wellpappe oder dergleichen gebildet ist und so eine sehr hohe Stabilität erfährt. Dieses gewellte Material kann dabei auch noch als Isolierung dienen und Wärmeein- und -austrag vermindern.

In diesem Zusammenhang ist es erfindungsgemäß äußerst vorteilhaft, wenn die Verstärkungsrippen von Innenteil und Außenteil aufeinander abgestimmt sind, sich aneinander abstützen und/oder gegeneinander verhaken können.

Durch aufeinander abgestimmte Verstärkungsrippen wird einerseits eine sehr gute Stabilisierung und Verstärkung des Behälters erzielt und andererseits eine sichere Verbindung zwischen Innenteil und Außenteil geschaffen.

Sehr vorteilhaft ist es gemäß einer weiteren Ausgestaltung der Erfindung auch, wenn wenigstens eine Entnahmeöffnung vorgesehen ist, die mit einem Deckel, einer Siegelfolie oder anderen Mitteln verschlossen sein kann.

Damit ist der Verpackungsbehälter sicher verschlossen.

Eine weitere sehr vorteilhafte Ausgestaltung der Erfindung liegt auch vor, wenn das Außenteil den Boden des Innenteils wenigstens teilweise bedeckt.

Dadurch wird auch der Boden verstärkt und beispielsweise sehr widerstandsfähig gegenüber Durchstoßen. Auch die Materialdicke im Bodenbereich kann reduziert werden.

Ebenfalls sehr vorteilhaft ist es erfindungsgemäß, wenn das Außenteil ausschließlich an den Seitenwänden des Innenteils angeordnet ist und einen Abstand zum Übergang zwischen Seitenwand und Boden aufweisen kann.

Hierdurch wird verhindert, daß das Außenteil von unten her Feuchtigkeit, Flüssigkeit, Fette oder Öle aufnehmen kann, wenn der Behälter auf feuchten, nassen oder anderweitig kontaminierten Untergründen gelagert oder bearbeitet wird.

Eine weitere äußerst vorteilhafte Ausgestaltung der Erfindung liegt auch vor, wenn der Verpackungsbehälter wenigstens eine Mundrolle, einen Rand oder dergleichen aufweist, die als Siegelrand ausgebildet sein können.

Hiermit kann ein Originalitätsverschluss geschaffen werden.

Im folgenden ist die Erfindung anhand mehrerer Ausführungsbeispiele veranschaulicht.

Dabei zeigen:
- Fig. 1: ein Schaubild eines erfindungsgemäßen Verpackungsbehälters mit einem Innenteil und einem Außenteil, wobei das Außenteil das Innenteil an seinem Umfang auf einem Teil der Höhe umschließt,
- Fig. 2: ein Schaubild eines weiteren Behälters bei dem das Außenteil in der Art einer Wellpappe ausgebildet ist,
- Fig. 3: ein Schaubild eines weiteren Behälters, bei dem das Außenteil das Innenteil sowohl an den Seiten als auch am Boden umschließt.

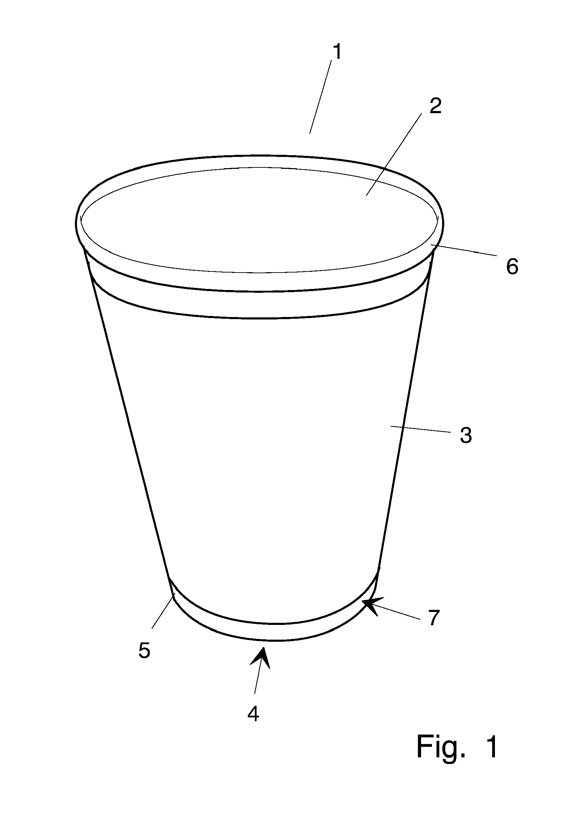

Mit 1 ist in Fig. 1 ein Becher bezeichnet, der ein Innenteil 2 und ein darum herum angeordnetes Außenteil 3 aufweist.

Das Innenteil 2 besteht dabei aus einem wenigstens annähernd runden Boden 4 und einer daran anschließenden, umlaufenden Seitenwand 5. Am vom Boden 4 abgewandten Ende der Seitenwand 5 ist ein nach außen stehender Siegelrand 6 vorgesehen.

Es ist auch denkbar, daß anstelle des Siegelrandes 6 eine Verdickung oder eine Mundrolle vorgesehen sein kann.

Sowohl auf die Verdickung als auch auf die Mundrolle kann eine Deckelfolie aufgesiegelt sein. Es ist aber auch denkbar, daß ein Schnappdeckel vorgesehen ist, der sich am Siegelrand 6, an der Verdickung und/oder an der Mundrolle abzustützen vermag und/oder hinter diese greift und sich so verriegelt.

Der Becher kann aus verschiedenen Materialien hergestellt sein, die jedoch gemäß der Erfindung vorzugsweise nachwachsend und/oder biologisch abbaubar sein sollen.

Hierfür sind Materialien wie PS, PE, PP, PET, PVC, aber auch Stärkepolymere, Polymilchsäure (PLA) oder andere Materialien ebenso denkbar, wie faserhaltige Materialien wie Papier, Pappe, Feinkarton oder dergleichen, die dann aber mit einer Resistenzschicht gegenüber dem Inhalt ausgerüstet sind.

Eine solche Resistenzschicht kann beispielsweise als Barriereschicht ausgebildet sein. Es sind aber auch Resistenzschichten denkbar, die wenigstens für eine definierte Zeitdauer Resistenzeigenschaften gegenüber dem Füllgut aufweisen. So kann beispielsweise ein beschichtetes oder imprägniertes Papier eingesetzt werden.

Als Beschichtung sind Kunststoffbeschichtungen ebenso denkbar, wie behandelte oder unbehandelte Papierlagen zum Beispiel aus Pergament, Pergamin, Pergament-Ersatz und/oder Pergaminersatz oder anderen die gewünschten Eigenschaften aufweisenden Papiere. Moulded-Fiber ist insbesondere denkbar, wenn die Oberfläche glatt ausgeführt ist.

Imprägnierungen beispielsweise auf Fettbasis sind auch denkbar.

In diesem Zusammenhang können auch mehrlagige Innenteile eingesetzt werden. Diese können einerseits eine oder mehrere Barriere- bzw. Resistenzschichten aufweisen, aber auch eine oder mehrere Tragschichten.

Als Barriereschichten sind beispielsweise auch EVOH, PA oder andere gebräuchliche Materialien mit Barriereeigenschaften denkbar. Diese können dann aber auch in extrem dünnen Schichten im Material des Innenteils 2 vorgesehen sein.

Insgesamt ist das Innenteil 2 erfindungsgemäß weich bzw. wenig steif ausgebildet. Dies kann einerseits eine Folge aus der Materialauswahl sein und andererseits eine Folge einer sehr geringen Wandstärke des Innenteils 2.

Ziel der Erfindung ist es, möglichst wenig nicht oder schlecht biologisch abbaubare und/oder nicht nachwachsende Rohstoffe einzusetzen, aber dennoch den bekannten Komfort und die gewünschte Stabilität der Behälter zu erzeugen.

Deswegen werden die Wandstärken des Innenteils 2 reduziert und zusätzlich noch wenigstens weitgehend aus nachwachsenden und/oder biologisch abbaubaren Rohstoffen hergestellt.

Solche Rohstoffe sind jedoch sehr teuer, da diese besondere Eigenschaften vor allem im Hinblick auf Lebensmittelverträglichkeit und/oder Barriereeigenschaften aufweisen müssen. Dies ist damit ein weiterer Grund, diese Materialien möglichst sparsam einzusetzen.

Die Stabilität und Festigkeit des Innenteils 2 kann auch konstruktiv erhöht sein, indem beispielsweise am unteren Rand des Innenteils 2 ein nach außen ragender, als Wulst ausgebildeter Rand 7 angeordnet ist. Dieser Wulst 7 verstärkt einerseits den meist stark belasteten Übergang zwischen Boden 4 und Seitenwand 5 und kann zusätzlich noch für eine bessere Standfestigkeit sorgen. Durch den Wulst 7 wird nicht nur die Aufstandsfläche des Innenteils 2 vergrößert, sondern auch der Schwerpunkt des Innenteils 2 nach unten verschoben.

Der Wulst 7 kann desweiteren noch als Stapelhilfe dienen, wenn mehrere Innenteile 2 oder auch komplette Becher 1 ineinander gestapelt werden, was oftmals zum Transport leerer Becher gemacht wird.

Dabei stützt sich der Wulst 7 an der Innenseite des darunterliegenden Innenteils 2 ab und sorgt so dafür, daß die Kontaktfläche zwischen den ineinander gestapelten Bechern 1 reduziert wird.

Zusätzlich kann der Wulst 7 nicht nur umlaufend ausgebildet sein, sondern auch segmentförmig, wodurch auch noch der Zutritt von Luft beim Entstapeln der Becher 1 erleichtert wird. Bei einer segmentförmigen Ausgestaltung des Wulstes 7 muss dieser am Ende eines Segmentes nicht vollständig zurücktreten, sondern es ist auch denkbar, daß nur die Dicke des Wulstes 7 variiert.

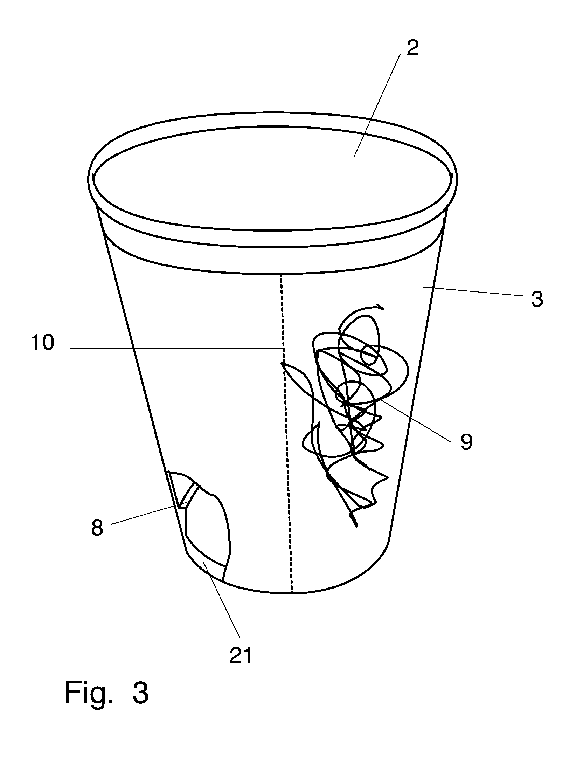

Der Wulst 7 kann auch mit einer in Fig. 3 angedeuteten Stapelkante 8 in Wechselwirkung treten, die beispielsweise als nach innen ragende Schulter im Innenteil 2 angebracht und wenigstens geringfügig oberhalb des Wulstes 7 angeordnet sein kann. Als Abstand vom Boden 4 zur Stapelkante 8 werden oftmals zwischen fünf und zehn Millimeter eingestellt.

Auch diese Stapelkante 8 verstärkt das Innenteil 2 konstruktiv.

Weitere Verstärkungsrippen sind denkbar.

Das Außenteil 3 umschließt im in Fig. 1 dargestellten Ausführungsbeispiel die Seitenwand 5 des Innenteils 2 umlaufend und bedeckt dabei einen Großteil der Höhe des Innenteils 2.

Nur am unteren Ende ist das Innenteil 2 nicht bedeckt. Der Abstand des Außenteils 3 vom Boden des Innenteils 2 beträgt dabei meist zwischen ein und fünf Millimeter. Das Außenteil 3 ist dabei durch Kleben, Siegeln, Rasten oder dergleichen am Innenteil 2 befestigt.

Eine Verrastung kann beispielsweise dadurch erfolgen, daß das Außenteil 3 sich am Wulst 7 abstützt. Andere umlaufende oder abschnittsweise Rastmittel wie Vorsprünge oder Rippen sind denkbar. Ebenso ist es denkbar, daß nicht nur das Innenteil 2 Verstärkungsrippen oder dergleichen aufweist, sondern auch das Außenteil 3. Diese Verstärkungsrippen sollten dann aufeinander abgestimmt sein, so daß diese ineinander oder hintereinander greifen können und so eine Verrastung erzeugt wird.

Das Außenteil 3 stabilisiert und festigt die Seitenwand 5 des Innenteils 2.

Bei anderen Ausgestaltungen, wie in Fig. 3 dargestellt, kann das Außenteil 3 das Innenteil 2 auch im Bodenbereich umschließen und weist selbst einen Boden 21 auf.

Das Außenteil 3 wird im allgemeinen aus Papier, Pappe, Karton oder anderen Materialien hergestellt und kann auch aus Recyclingmaterialien bestehen. Dabei kann das Außenteil 3 auch mehrlagig ausgebildet sein. Das Außenteil 3 ist vergleichsweise unkritisch in Bezug auf Lebensmitteltauglichkeit, da das Füllgut nicht mit dem Außenteil in Kontakt kommt.

Auf der Außenseite des Außenteils 3 kann ein Druckbild 9 vorgesehen werden. Um ein hochwertiges Druckbild 9 zu erhalten, kann die Außenseite mit einem besonders glatten und gut bedruckbaren Material beschichtet sein. Es sind hier Feinpapiere ebenso denkbar, wie entsprechend ausgerüstete Kunststoffe. In diesem Zusammenhang ist es auch denkbar, daß ein Unterlack unter dem eigentlichen Druckbild vorgesehen ist.

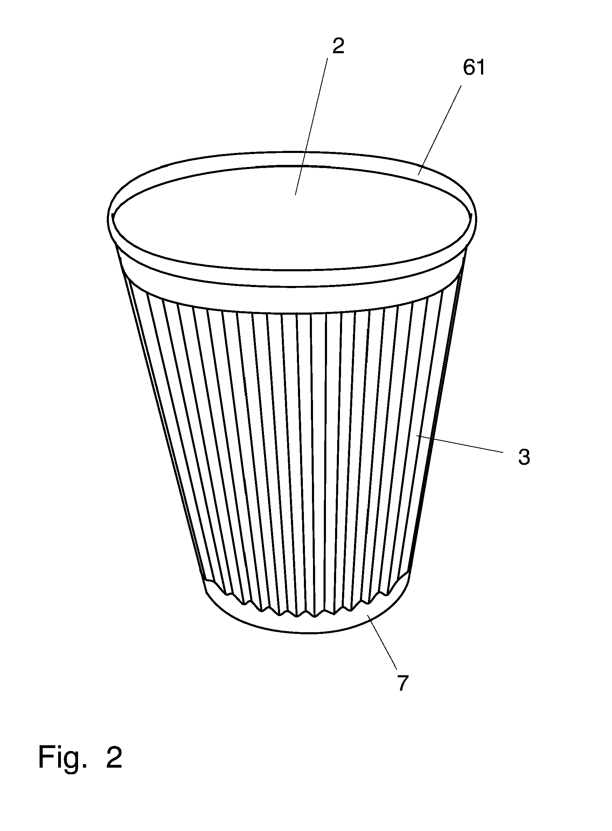

Um Abrieb der Druckfarben und/oder eine Beschädigung des Druckbildes zu vermeiden kann auch ein Überlack oder eine Schutzbeschichtung vorgesehen sein. Das Außenteil 3 kann auch aus gewellten Materialien wie beispielsweise Wellpappe oder dergleichen gefertigt sein, die dann für eine sehr gute Isolierung des Bechers 1 dienen können oder wenigstens besonders angenehme taktile Eigenschaften aufweisen. Eine solche Ausgestaltung ist in Fig. 2 abgebildet.

Eine Isolierung kann auch beispielsweise durch eine geschäumte Beschichtung oder Zwischenschicht zum Beispiel auf Basis von Stärkepolymeren geschaffen werden. Es ist denkbar, daß hierzu Mikrokapsel eingesetzt werden, um eine einem vorgesehenem Profil entsprechende Verteilung zu erzeugen.

Isolierte Becher 1 eignen sich besonders für kalte oder heiße Füllgüter.

Das Außenteil 3 kann wenigstens partiell auch mit einer Schutzbeschichtung ausgerüstet sein, die diese unempfindlich gegenüber Feuchtigkeit, Flüssigkeit aber auch Fetten machen kann.

Gerade an den unteren und oberen Rändern des Außenteils 3 besteht die Gefahr, daß dort Feuchtigkeit, Flüssigkeit oder auch Fette eindringen können, da dort meistens offene Schnittkanten vorliegen.

Gerade in diesen Bereichen kann die Schutzbeschichtung vorgesehen sein. Es ist aber auch denkbar, daß die Kanten des Außenteils 3 nach innen umgefaltet sind und so die Schnittkanten geschützt werden und so das Eindringen von Feuchtigkeit, Flüssigkeit oder dergleichen vermieden wird.

In diesem Zusammenhang ist es auch denkbar, daß das Außenteil 3 durch eine entsprechende Ausrüstung wenigstens für eine definierte Zeitdauer Resistenzeigenschaften gegenüber diesen Stoffen aufweist. Dies kann beispielsweise auch durch eine Imprägnierung oder eine enstprechende Materialauswahl sichergestellt werden.

Auch ist es denkbar, daß diese Resistenzeigenschaften durch eine Bedruckung erzeugt werden.

Das Außenteil 3 kann eine Sollbruchstelle 10 aufweisen, an der sich das Außenteil 3 öffnen und vom Innenteil 2 trennen lässt.

Innenteil 2 und Außenteil 3 können dann sogar getrennt voneinander der Entsorgung zugeführt werden, obwohl dies bei einer erfindungsgemäßen Stoffauswahl nicht mehr erforderlich ist.

Anstatt eines Bechers 1 im klassischen Sinn mit einem runden Boden 4 kann auch ein eckiges Behältnis geschaffen wird.

Der Becher 1 kann auf verschiedene Arten hergestellt worden sein.

Es ist einerseits denkbar, daß das Innenteil 2 klassisch in eine Tiefziehform tiefgezogen, oder aber aus einem Vorformling geblasen wurde.

Dabei kann das Innenteil 2 direkt in das Außenteil 3 hinein tiefgezogen worden sein.

Ebenso kann das Innenteil 2 in das Außenteil 3 hinein geblasen worden sein.

In beiden Fällen erübrigt sich in den allermeisten Fällen eine zusätzliche Befestigung des Innenteils 2 am Außenteil 3, da alleine durch den weichen Kunststoff beim Tiefziehen bzw. Blasen eine sehr gute Haftung zwischen den beiden Teilen entstanden ist.

Zusätzlich kann auch eine Verrastung oder dergleichen vorgesehen werden. Es ist beispielsweise denkbar, daß wie oben ausgeführt, Ausnehmungen im Außenteil 3 vorgesehen werden, in die hinein das Innenteil geformt wird und so eine sehr stabile Verrastung erzeugt werden kann. Ebenso ist es denkbar, daß die Verrastung in umgekehrter Richtung ausgebildet ist. Dies bedeutet, daß nach innen ragende Erhebungen am Außenteil 3 vorgesehen werden, um die sich das Innenteil 2 beim Formen herumlegt und so eine mechanische Verbindung zwischen den beiden Teilen geschaffen wird.

Es ist aber auch denkbar, daß gemäß einer weiteren Ausgestaltung der Erfindung die beiden Teile getrennt gefertigt und erst anschließend zusammengefügt wurden.

Es ist dabei denkbar, daß das Außenteil 3 um das Innenteil 2 herumgelegt und an einer Seitennaht 41 in sich verklebt ist.

Um das Außenteil 3 am Innenteil 2 zu befestigen und ein ungewolltes Abrutschen zu vermeiden, kann entweder eine Verrastung, ein Wulst 7 oder dergleichen vorgesehen werden. Das Außenteil 3 vermag sich an diesen Erhebungen abzustützen.

Zusätzlich oder anstatt einer solchen mechanischen Verbindung kann auch eine Klebung oder Verschweißung zwischen Innenteil 2 und Außenteil 3 vorgesehen werden.

In diesem Zusammenhang ist es auch denkbar, daß das Außenteil 3 fertig zu einem Mantel geformt, an der Seite in sich verbunden und dann über das Innenteil 2 geschoben und mit diesem verrastet wird.

Es sind auch mehrere Rippen, Erhebungen oder andere mechanisch wirkende Vorrichtungen denkbar, die sowohl am Innenteil 2 als auch am Außenteil 3 angeordnet sind und sich aneinander oder am jeweils anderen Teil abzustützen vermögen.

Wenigstens ein Teil der Schichten des Innenteils 2 können mit Füllstoffen versehen sein. Es ist denkbar, daß wenigstens eine Schicht mit CaC03, Stärke, Talkum oder anderen Füllstoffen versehen ist. Diese Füllstoffe vergrößern das Volumen des jeweiligen Materials und sind im Vergleich zum Material sehr günstig. So sind stärkebasierende Polymere zum Beispiel sehr teuer. Vor allem in einer nicht direkt mit dem Füllgut in Kontakt kommenden Schicht kann der Bedarf am jeweiligen Rohstoff erheblich reduziert werden. Füllstoffanteile zwischen 0 und 80% sind denkbar und haben zu sehr guten Ergebnissen geführt.

Mit den Füllstoffen werden auch die Eigenschaften des jeweiligen Schichtmaterials optimiert. Es ist denkbar, daß eine gezielte Porosität erzeugt wird. In diesem Fall kann die poröse Schicht beispielsweise durch eine Barriereschicht abgedeckt sein. Es ist aber auch denkbar, um beispielsweise die Eigenschaften des Füllgutes möglichst lange zu erhalten, daß durch eine so erzeugte Porosität eine gewisse Atmungsaktivität oder Semipermeabilität erzeugt wird.

Dabei ist es dann auch denkbar, daß die Füllstoffe auch in der direkt mit dem Füllgut in Kontakt stehenden Schicht angeordnet sind. Eine partielle Abdeckung dieser Schicht ist denkbar, so daß beispielsweise nur ein Luftraum oberhalb des Füllgutes eine Porosität aufweist und der vom Füllgut eingenommene Bereich durch eine Barriere oder dergleichen abgedeckt ist.

## Patentansprüche

1. Verpackungsbehälters mit einem Innenteil und einem Aussenteil, wobei das Innenteil ein schalen- oder becherförmiges Behältnis bildet und das Aussenteil das Innenteil wenigstens teilweise umschließt, **dadurch gekennzeichnet, daß** das Innenteil aus einem formbaren, insbesondere thermoformbaren und/oder tiefziehbaren Material ein- oder mehrstückig hergestellt ist, wobei als Material vorzugsweise wenigstens ein ein- oder mehrlagiges einen Anteil aus nachwachsenden, biologisch abbaubaren und/oder recycelten Rohstoffen hergestelltes Material vorgesehen ist, das wenigstens in einer Lage mit Füllstoffen ausgerüstet ist und daß das Aussenteil wenigstens den Umfang des Innenteils wenigstens teilweise umschließt und aus einem nachwachsenden, biologisch abbaubaren und/oder recyceltem Rohstoff hergestellt ist, wobei vorzugsweise faserhaltige Materialien vorgesehen sein können.

2. Verpackungsbehälter nach Anspruch 1, **dadurch gekennzeichnet, daß** das Innenteil in das Außenteil hinein tiefgezogen oder in dieses hinein geblasen ist, wobei das spätere Innenteil als flache Folie oder als Vorformling vorgesehen sein kann.

3. Verpackungsbehälter nach Anspruch 1 oder 2, **dadurch gekennzeichnet, daß** das Innenteil aus einem Polymer, insbesondere aus PS, PE, PP, PET, PVC, Stärkepolymeren, Polymilchsäure oder anderen natürlichen oder künstlichen Polymeren ein- oder mehrschichtig auch in Kombination mit Barriereschichten, Lacken oder dergleichen geformt ist und wenigstens in einer Schicht einen Anteil eines Füllstoffes, vorzugsweise CaC03, Quarz, Talkum, Stärke oder dergleichen enthält.

4. Verpackungsbehälter nach Anspruch 3, **dadurch gekennzeichnet, daß** die die Füllstoffe enthaltende Schicht durch mindestens eine weitere Schicht gegenüber dem Füllgut abgedeckt ist.

5. Verpackungsbehälter nach Anspruch 3 oder 4, **dadurch gekennzeichnet, daß** der Anteil an Füllstoffen zwischen 0 und 80% beträgt.

6. Verpackungsbehälter nach einem der vorangehenden Ansprüche, **dadurch gekennzeichnet, daß** das Innenteil aus einem faserhaltigen Werkstoff wie Moulded-Fiber aber auch Papier, Pappe, Karton gefertigt ist, wobei diese auch aus recycelten Materialien hergestellt sein können, und wenigstens auf der Innenseite mit einer Resistenz-Schicht gegenüber Flüssigkeiten, Fetten oder dergleichen ausgerüstet sein kann und wobei diese Werkstoffe tiefgezogen oder in eine Form eingebracht sein können.

7. Verpackungsbehälter nach nach einem der vorangehenden Ansprüche, **dadurch gekennzeichnet, daß** das Aussenteil aus einem faserhaltigen Werkstoff wie Papier, Pappe, Karton, Moulded-Fiber und/oder Polymerfilmen oder Teilen gefertigt ist und um das Innenteil herumgelegt, über dieses gestülpt ist oder als Tiefziehform für das Innenteil dienen kann.

8. Verpackungsbehälter nach einem der vorangehenden Ansprüche, **dadurch gekennzeichnet, daß** wenigstens eine Kante des Außenteils abgedichtet und/oder feuchtigkeits-, flüssigkeits- und/oder fettunempfindlich ausgerüstet sein kann, wobei diese Abdichtung durch Beschichten, Abdecken und/oder Umfalten erzeugt sein kann.

9. Verpackungsbehälter nach einem der vorangehenden Ansprüche, **dadurch gekennzeichnet, daß** das Außenteil mit dem Innenteil durch Kleben, Klemmen und/oder Rasten verbunden ist, wobei wenigstens ein Vorsprung am Innenteil vorgesehen sein kann, der in ein entsprechendes Gegenstück am Außenteil einzugreifen vermag.

10. Verpackungsbehälter nach einem der vorangehenden Ansprüche, **dadurch gekennzeichnet, daß** wenigstens im Bereich des Überganges zwischen Boden und Seitenwand eine Verstärkungsrippe vorgesehen ist, die umlaufend ausgebildet sein kann, wobei die Verstärkungsrippe nach außen gerichtet und gleichzeitig als Rastnase für das Außenteil vorgesehen sein kann.

11. Verpackungsbehälter nach einem der vorangehenden Ansprüche, **dadurch gekennzeichnet, daß** das Außenteil mit wenigstens einer Verstärkungsrippe ausgerüstet wird, die umlaufend ausgebildet sein kann.

12. Verpackungsbehälter nach einem der vorangehenden Ansprüche, **dadurch gekennzeichnet, daß** die Verstärkungsrippen von Innenteil und Außenteil aufeinander abgestimmt sind, sich aneinander abstützen und/oder gegeneinander verhaken können.

13. Verpackungsbehälter nach einem der vorangehenden Ansprüche, **dadurch gekennzeichnet, daß** wenigstens eine Entnahmeöffnung vorgesehen ist, die mit einem Deckel, einer Siegelfolie oder anderen Mitteln verschlossen sein kann.

14. Verpackungsbehälter nach einem der vorangehenden Ansprüche, **dadurch gekennzeichnet, daß** das Außenteil den Boden des Innenteils wenigstens teilweise bedeckt.

15. Verpackungsbehälter nach einem der Ansprüche 1 bis 13, **dadurch gekennzeichnet, daß** das Außenteil ausschließlich an den Seitenwänden des Innenteils angeordnet ist und einen Abstand zum Übergang zwischen Seitenwand und Boden aufweisen kann.

16. Verpackungsbehälter nach einem der vorangehenden Ansprüche, **dadurch gekennzeichnet, daß** der Verpackungsbehälter wenigstens eine Mundrolle, einen Rand oder dergleichen aufweist, die als Siegelrand ausgebildet sein können.
